# EUROPÄISCHE PATENTANMELDUNG

(11) **EP 1 050 707 A2**
(43) Veröffentlichungstag der Anmeldung: **08.11.2000**
(21) Anmeldenummer: 00107368.3
(22) Anmeldetag: 05.04.2000
(51) Int. Cl.: F16L 47/02

(54) **Anschweissbare Schelle für aus thermisch schweissfähigem Material bestehende Leitungsrohre**

(30) Priorität: 03.05.1999 DE 29907817 U
(71) Anmelder: DA-Kunststoff GmbH, 42859 Remscheid (DE)
(72) Erfinder: Hintzen, Werner, 50765 Köln (DE)
(74) Vertreter: Mentzel, Norbert, Dipl.-Phys.

(57) **Zusammenfassung**

Bei einer Schelle verwendet man Segmente 12 aus schweißfähigem Material, um damit Leitungsrohre aus schweißfähigem Material zu reparieren. Es werden dabei Schweißmatten in die Segmente 12 eingebracht. An den Begrenzungskanten der Segmente 12 sind längsverlaufende Flansche 18, 19 vorgesehen, zwischen denen im Gebrauchsfall Befestigungselemente angreifen. Die Innenbegrenzungskante 16 des Segments 12 hat eine einzige Lasche 30, welche die Innenfläche 53 des Flansches 19 überragt, während an der gegenüberliegenden Innenbegrenzungskante 16 eine einzige, zur Aufnahme der Lasche dienende Tasche 40 sich befindet. Die Lasche 30 ist mit einer sehr geringen Laschendicke versehen. Aus der Innenfläche 52, 53 der beiden Flansche 18, 19 ragt mindestens ein Schutzzapfen 50 heraus, dessen Zapfenlänge größer/gleich der Vorsprungslänge ausgebildet ist. Diesen Schutzzapfen 50 sind Bohrungen im jeweiligen Gegenflansch 18, 19 zugeordnet.

## Beschreibung

Die Erfindung richtet sich auf eine Schelle aus thermisch schweißfähigem Material. Man verwendet derartige Schellen, um z.B. nachträglich an einem bereits verlegten, unter Mediendruck stehenden Leitungsrohr eine Abzweigleitung anzuschließen. Dazu verwendet man Schellen, die mindestens einen Rohrabgang an einem ihrer Segmente aufweisen. Dieser Rohrabgang dient zunächst zum Anbohren des Leitungsrohres, dann aber auch zur Medienführung an die am Rohrabgang angeschlossene Abzweigleitung. In anderen Fällen, wo das Leitungsrohr eine defekte Stelle aufweist, wird, zwecks Reparatur, eine Schelle aus Segmenten ohne Rohrabgang um das Leitungsrohr herumgelegt.

Bei der bekannten Schelle (DE 296 16 864 U) werden zwei Segmente um das Leitungsrohr herumgelegt, bei denen an den beiden Innenbegrenzungskanten der Segmente mehrere in Abstand zueinander angeordnete Laschen mit keilförmigem Querschnitt angeordnet sind, welche die Innenbegrenzungskanten der Segmente überragen. Zwischen diesen Laschen befinden sich komplementär zu den Laschen profilierte Taschen, welche die Innenbegrenzungskanten unterschreiten und im Gebrauchsfall zur Aufnahme der Laschen dienen. Die Laschen haben im Fußbereich eine größere Querschnittsdicke als im Kopfbereich. Die Heizmatte hat ein mit den Laschen und Taschen konformes Umrissprofil und ist an der Innenfläche der Segmente und der Laschen angeordnet. Beim Erhitzen des schweißfähigen Materials durch die Heizmatte kommt es zwar an der Lascheninnenfläche zu einer befriedigenden Verbindung, doch liegt an der Laschenaußenfläche und der Tascheninnenwand keine ausreichende Verschweißung vor.

Es gibt Schellen anderer Art (EP 0 438 990 A) deren Segmente keine vorspringenden Laschen oder Taschen aufweisen aber an ihren Innenbegrenzungskanten längsverlaufende Flansche aufweisen. Die Berührungsflächen dieser Flansche besitzen jeweils einen Zapfen mit zueinander unterschiedlichem Querschnittsprofil. Diese Zapfen sollen vermutlich eine unerwünschte Wendeposition des einen Segments gegenüber dem anderen verhindern. Die Flansche der beiden Segmente werden von Gleitelementen mit konischem Profil zusammengedrückt. Das setzt eine bestimmte Orientierung der Segmente voraus.

Der Erfindung liegt die Aufgabe zugrunde eine zuverlässige Schelle mit geringem Bauaufwand zu entwickeln, die mit geringer Heizenergie besonders mediendichte Schweißverbindungen zwischen den Segmenten und dem Rohr erreicht. Dies wird durch die im Anspruch 1 angegebenen Maßnahmen erreicht, denen folgende besondere Bedeutung zukommt.

Durch die geringe Laschendicke gelangt im Gebrauchsfall die in der Lasche durch die Heizmatte erzeugte Wärme sowohl an die Innenfläche als auch an die Außenfläche der Lasche gleich gut. An beiden Flächen der Lasche entstehen ausreichend hohe Temperaturen um eine beidseitige Schweißverbindung der Lasche zu erzeugen. Obwohl man nur eine einlagige Heizmatte verwendet, kommt es nicht nur zwischen der Lascheninnenfläche und dem Umfang des Leitungsrohres zu einer Schweißverbindung, sondern auch im äußeren Berührungsbereich zwischen der Laschenaußenfläche und der Tascheninnenwand. Man erhält also auch dort eine einwandfreie Schweißverbindung, wo an sich keine Heizmatte vorgesehen ist, nämlich im Bereich der Tasche, wo die Heizmatte eine Lücke hat. Trotz des geringen Bauaufwands der Matte erhält man eine beidseitige Schweißverbindung der Lasche. Weil nur eine Lasche vorhanden ist, in welche die Heizmatte integriert ist, kann es auch im Extremfall nicht zu unerwünschten Kontaktierungen zwischen den Leitungsdrähten benachbarter, zahnförmig ineinandergreifender Laschen kommen. Damit sind Fehlkontaktierungen ausgeschlossen. Außerdem lässt sich ein Segment mit nur einer durchgehenden Lasche, die in axialem Endabstand vor der Stirnfläche des Segments endet, leicht herstellen.

Die geringe Laschendicke erzeugt eine gute radiale Elastizität für eine Auweichbewegung der Lasche beim Aufstecken der Segmente auf das Leitungsrohr. Das gilt insbesondere bei zweischaligen Schellen, wo die beiden Segmente, im Querschnitt gesehen, ein Halbkreisprofil haben, das von der Lasche überragt wird. Andererseits erfordert die geringe Laschendicke eine schonende Behandlung. Dies ist sowohl bei der Lagerung als auch beim Transport der Laschen nötig. Um eine unzulässig hohe Deformation der Laschen zu verhindern, die zu einem Bruch des in ihnen befindlichen Leitungsdrahts der Heizmatte führen könnte, wird vorgeschlagen, Schutzzapfen vorzusehen, welche ebenfalls die Innenbegrenzungskante der Segmente überragen und mindestens eine Zapfenlänge aufweisen, die der Vorsprungslänge der Lasche entspricht. Stellt man die Segmente auf einer Unterlage ab, dann stützen sich die Segmente an den Zapfenenden ab, während die Lasche nicht mit der Unterlage in Berührung kommt und daher nicht deformiert werden kann. Durch die mehrfache Anordnung der Schutzzapfen erhält man eine Art 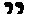 Korb", welcher die herausragende Lasche schützt und beim Aufprall eines fallengelassenen Segments auf den Boden die Laschen vor Beschädigungen schützt.

Vorteilhaft ist es die Schutzzapfen an den Innenflächen von Flanschen anzuordnen, welche an den Innenbegrenzungskanten der Segmente sitzen. Die Schutzzapfen können dann zugleich zur Führung der Segmente bei ihrer Montage am Rohr dienen, wenn man ihnen konforme Bohrungen in dem jeweils benachbarten Segment zuordnet, wo sie bei der Montage eindringen können. Damit erfüllen die Schutzzapfen auch die Funktion einer Montagevereinfachung.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: eine perspektivische Ansicht eines nach der Erfindung gestalteten Segments einer an sich zweischaligen Schelle,
- Fig. 2: die Stirnansicht dieses Segments bei der Lagerung, vor Gebrauch,
- Fig. 3,: im Querschnitt und im Ausbruch, die beiden Segmente der erfindungsgemaßen Schelle vor ihrer Montage an einem Leitungsrohr,
- Fig. 4,: in einer der Fig. 3 entsprechenden Schnittdarstellung, die Segmente der Schelle nach ihrer Befestigung am Leitungsrohr, aber vor Ausführung der Schweißverbindung, wobei die Schnittführung gegenüber Fig. 3 versetzt ist,
- Fig. 5,: in einer zu Fig. 4 analogen Darstellung, den Querschnitt durch die beiden am Leitungsrohr befestigten Segmente nach vollzogener Schweißverbindung, wobei die Schnittführung sowohl gegenüber Fig. 3 als auch gegenüber Fig. 4 versetzt ist, und
- Fig. 6,: in starker Vergrößerung, einen Eckbereich der Lasche mit dem darin integrierten Teilstück einer Heizmatte.

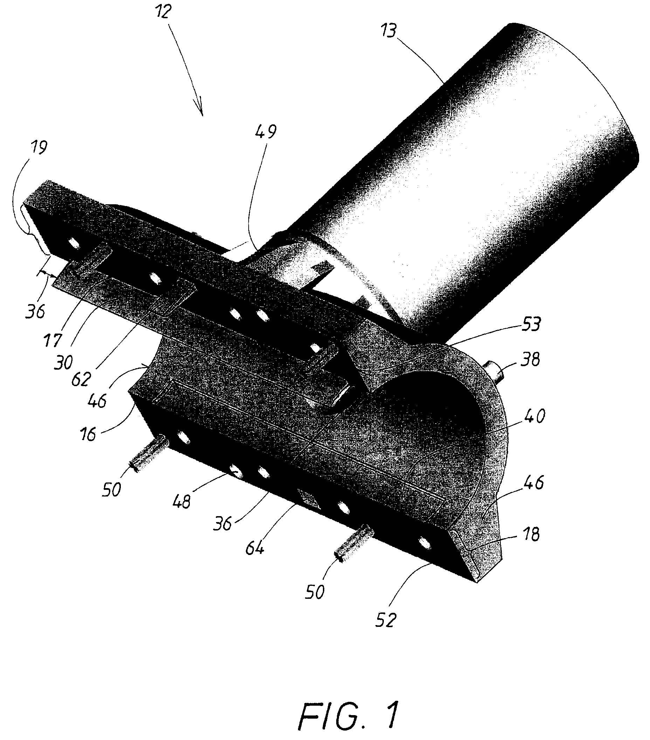

Die Schelle besteht aus zwei teilzylindrischen Segmenten 11, 12, die im Gebrauchsfall an der gewünschten Stelle eines Leitungsrohres 10 durch Schweißen befestigt werden. Das eine Segment 12 besitzt einen Rohrabgang 13. Ein solcher Rohrabgang 13 könnte auch fehlen oder es könnten an beiden Segmenten 11, 12 Rohrabgänge 13 vorgesehen sein. Die beiden Segmente 11, 12 sind zueinander formgleich ausgebildet, weshalb es genügt, den besonderen Aufbau des einen Segments 12 anhand von Fig. 1 naher zu beschreiben.

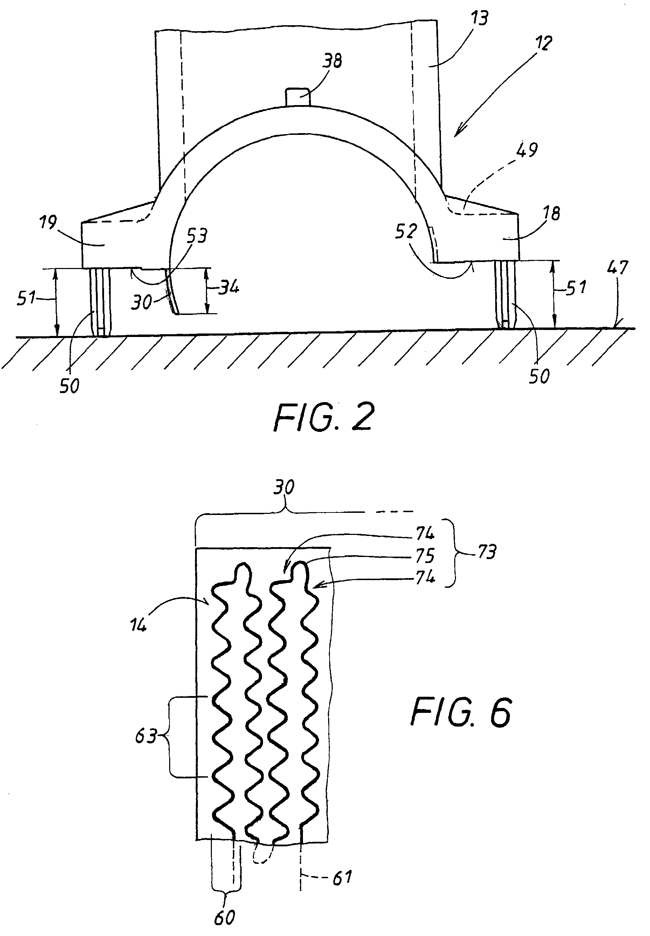

Jedes Segment 12 ist von zwei Innenbegrenzungskanten 16, 17 eingeschlossen, an denen längsverlaufende radial abgehende Flansche 18, 19 sitzen. An der einen Innenbegrenzungskante 17 befindet sich eine Lasche 30, welche die Flanschinnenfläche 52 überragt. An der anderen Innenbegrenzungskante 16 dagegen ist eine entsprechend dimensionierte Tasche 40 angeordnet, welche die Flanschinnenflache 53 unterschreitet. Die Lasche 30 und die Tasche 40 sind zueinander komplementär dimensioniert, was noch näher beschrieben werden wird. Die Lasche 30 endet mit einem axialen Endabstand 36 vor den Stirnflächen 46 des jeweiligen Segments 12, wie aus Fig. 1 zu entnehmen ist. Entsprechendes gilt für die Tasche 40. In den Innenflächen 14 der beiden Segmente 11, 12 ist, wie aus Fig. 2 zu erkennen ist, eine Heizmatte 20 integriert, welche sich über die ganze Laschenlänge 34 und Laschenbreite erstreckt, aber die Tasche 40 freilässt.

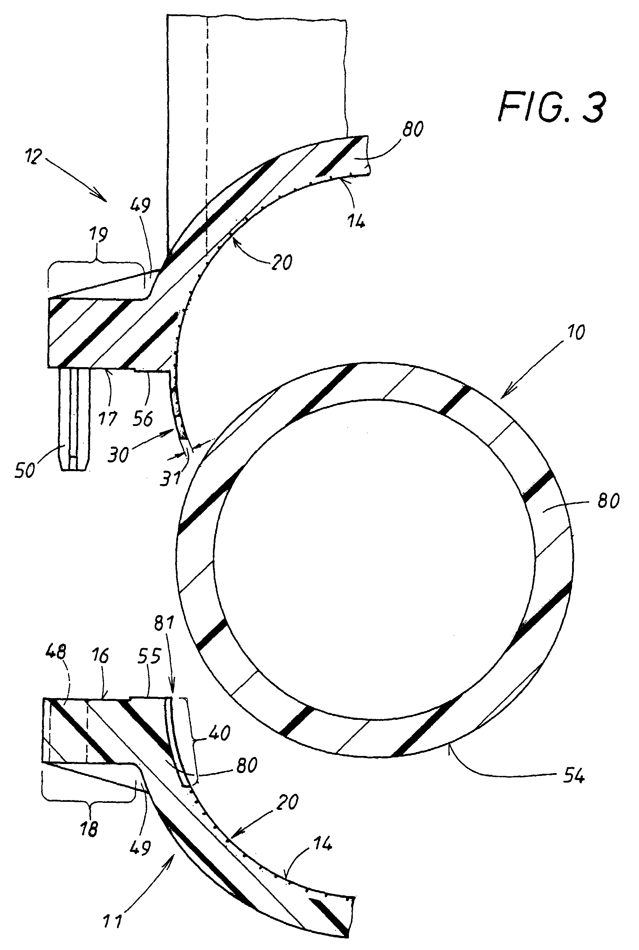

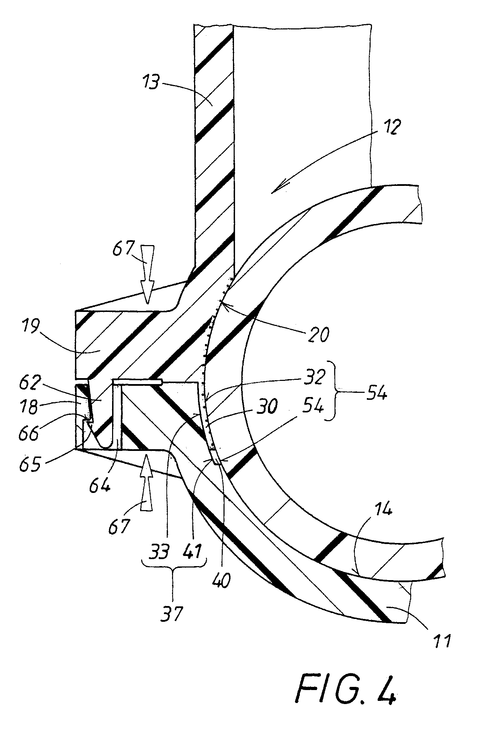

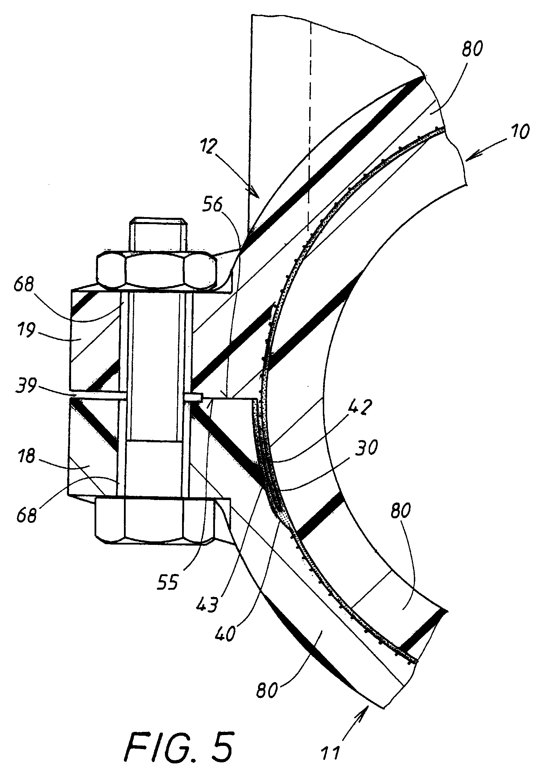

Wenn die beiden Segmente 11, 12 in der aus Fig. 3 ersichtlichen spiegelbildlichen Weise benutzt werden, liegen im Gebrauchsfall die beiden Innenbegrenzungskanten 16, 17 einander gegenüber, wie aus Fig. 3 und 4 zu ersehen ist. Im Gebrauchsfall greift die jeweilige einzige Lasche 30 der beiden Segmente 11, 12 wechselseitig in die jeweils gegenüberliegende Tasche 40 ein. Die Flansche 18, 19 werden paarweise zusammengehalten. Dazu dienen, gemäß Fig. 5, Befestigungselemente in Form von Bolzen 58 und Muttern 59. Aus einer Zusammenschau von Fig. 1 und 3 ist zu erkennen, dass an den Innenflächen 52, 53 der beiden Flansche 18, 19 Anschlagelemente in Form von axialen Anschlagleisten 55, 56 angeordnet sind. Die Anschlagleisten 55, 56 sind radial neben der Lasche 30 bzw. der Öffnung der Tasche 40 angeordnet. Im Gebrauchsfall stützen sich, wie Fig. 5 zeigt, die beiden Anschlagleisten 55, 56 aneinander ab. Die Segmente werden gegeneinander gepresst und es kommt eine Dichtung zustande, welche für das im Zusammenhang mit Fig. 5 noch näher zu beschreibende Schweißverfahren bedeutsam ist.

In die jeweiligen konkaven Innenflächen 14 der beiden Segmente 11, 12 ist die bereits erwähnte Heizmatte 20 integriert, von welcher in Fig. 6 nur ein Teilstück dargestellt ist. In der Heizmatte 20 befindet sich ein Leitungsstrang 60 der in Windungen verlegt ist. Dieser Windungsverlauf des Heizungsstrangs 60 wird durch eine Kunststoffschicht fixiert und erzeugt ein Vorprodukt, das bei der Spritzgussherstellung des Endprodukts an der Innenfläche der zur Ausbildung der Segmente 11, 12 dienenden Spritzgussform angeordnet wird. Die beiden Segmente 11, 12 bestehen nämlich aus schweißfähigem Material 80, was auch für das Leitungsrohr 10 gilt.

In Fig. 3 ist die an der Innenfläche 14 angeordnete Heizmatte 20 durch punktförmige Querschnitte des noch in Fig. 6 näher zu beschreibenden elektrischen Leiters 61 angedeutet. Ein Teilstück der Heizmatte 20 ist an der Innenfläche der Lasche 30 angeordnet. Die Lasche 30 hat eine verhältnismäßig geringe Laschendicke 31. Im vorliegenden Ausführungsbeispiel ist eine gleichförmige Laschendicke 31 angeordnet, die sich über die ganze, aus Fig. 2 erkennbare Laschenlänge 34 erstreckt. Die Lasche 30 hat hier blattförmige Struktur. Im Gebrauchsfall, gemäß Fig. 4, ergeben sich bei der Lasche 30 zwei Berührungszonen 35, 37. Die Innenberührungszone 35 entsteht durch Flächenkontakt zwischen der Lascheninnenfläche 32 und der Umfangsfläche 54 des Leitungsrohrs 10. Die Außenberührungszone 37 wird durch Kontakt zwischen der Laschenaußenfläche 33 und der Tascheninnenwand 41 erzeugt.

Die erwähnten elektrischen Leiter 61 der in jedes Segment 11, 12 integrierten Heizmatte 20 haben elektrische Kontakte 38 im Bereich der Segmentenden, was in Fig. 2 und 1 zu erkennen ist. An diesen elektrischen Kontakten 38 wird eine Stromquelle angeschlossen, die zur elektrischen Erwärmung der Heizmatte 20 führt. Wegen der wenigstens stellenweise geringen Laschendicke 31 werden die vorerwähnten, miteinander kontaktierten Flächen nicht nur an der Innenberührungszone 35, sondern auch an der Außenberührungszone 37 verflüssigt. Das weich gewordene Material 80 zwischen den Segmenten 11, 12 und dem Leitungsrohr 10 entsteht, wie Fig. 5 durch Punktschraffur verdeutlicht, beidseitig der in die Tasche 40 eingreifenden Lasche 30. Das Material 80 fließt hier ineinander und nach dem Erkalten kommt es beidseitig der Lasche 30 zu einer inneren und einer äußeren Schweißverbindung 42, 43. Die durch die Befestigungselemente 58, 59 fest gegeneinander gedrückten Anschlagleisten 55, 56 verhindern ein Ausströmen der flüssigen Massen in die Fuge 39 zwischen den beiden Flanschen 1, 19.

Fig. 6 zeigt in Vergrößerung einen Eckbereich der Lasche 30 in Draufsicht. Hier sind die näheren Details des in den vorausgehenden Figuren nur schemenhaft angedeuteten Heizstrangs 60 gezeigt. Der Heizstrang 60 besteht aus einem wellenlinienförmigen ebenen Verlauf eines Heizleiters 61. Dieser Wellenlinienverlauf 63 kann als 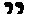 Mäander" bezeichnet werden. Dieser mäanderförmige Heizstrang 60 wird nun seinerseits, wie aus Fig. 6 hervorgeht, in engen Windungen 73 verlegt. Dabei ergeben sich parallele Schenkel 74 mit dazwischen liegenden Wendestellen 75.

Wie am besten aus Fig. 1 und 2 zu erkennen ist, befinden sich Schutzzapfen 50 an den beiden Flanschen 18, 19, welche sich über die Flanschinnenflächen 52, 53 erheben. Diese Schutzzapfen 50 haben eine größere Zapfenlänge 51, als der Vorsprungslänge 34 der kreisförmig gekrümmten, blattförmigen Lasche 30 entspricht. Stößt das Segment, wie Fig. 1 zeigt, gegen eine harte Fläche 47, so fangen die Enden der Schutzzapfen 50 den Stoß auf. Es kommt zu keiner Deformation der Lasche 30. Die Zapfen 50 erfüllen also eine Schutzfunktion und verhindern eine Beschädigung der herausragenden Lasche 50.

Wie weiterhin aus Fig. 3 zu erkennen ist, sind den Schutzzapfen 50 der beiden Flansche 18, 19 jeweils Bohrungen 18 in den gegenüberliegenden Flanschen 19, 18 des anderen Elements 11 zugeordnet. Die Bohrungen 48 sind in einem der Lage der Zapfen 50 entsprechenden Anordnungsmuster versehen. Beim Zusammenbau der Segmente 11, 12 fahren die Schutzzapfen 50 in die Bohrungen 48 ein und sind führungswirksam. Das ergibt eine weitere Funktion für diese Zapfen 50. Es entsteht eine wechselseitige Zentrierung der beiden Segmente 11, 12. Das stellt sicher, dass die beidseitigen Laschen 30 in die ihnen zugeordneten Öffnungen der Taschen 40 einfahren. Damit sind eine Beschädigung der Lasche 30 verhindernder Zusammenbau der Schelle sichergestellt.

Zur Erleichterung des Zusammenbaus besitzen die Segmente 11, 12 zueinander komplementäre Schließelemente 62, 63, wie am besten aus Fig. 4 zu erkennen ist. Sie gehören zu einer Schnappverbindung, die beim Zusammenbau der beiden Segmente 11, 12 in Eingriff kommt und für eine vorläufig Befestigung der Segmente 11, 12 aneinander und am Leitungsrohr 10 sorgt. Das eine Schließelement 62 besteht aus einem Hakenglied 62 am einen Flansch 19, der sich, gemäß Fig. 1, über die Flanschinnenfläche 52 erhebt. Das komplementäre andere Schließende 64, welches am anderen Flansch 18 sich befindet, besteht aus einer Öffnung 64. Im Kupplungsfall, gemäß Fig. 4, greift das Hakenglied 62 mit seinem Hakenkopf 65 in die Öffnung 64 des Gegenflansches 18 ein und hintergreift ein in der Öffnung 64 vorgesehenen stufenförmigen Absatz 66. Die Dimensionen im Hakenglied 62 und im Absatzverlauf 66 der Öffnung 64 sind so bemessen, dass beim Einschnappen des Hakenkopfes 65 es zu einem durch die Kraftpfeile 67 in Fig. 4 verdeutlichten Andruck zwischen den beiden Segmenten 11, 12 kommt. Damit ist bereits durch eine einfache Schnappmontage ein Zusammenhalt der beiden Bauteile 11, 12 am Leitungsrohr 10 gewährleistet, bevor die erwähnten Befestigungselemente 58, 59 gesetzt und betätigt werden.

Für das Setzen der Bolzen sind, wie aus Fig. 3 hervorgeht, die beiden Flansche 18, 19 mit paarweise im Gebrauchsfall ausgerichteten Löchern 68 versehen. Beim Festziehen der Muttern 59 auf den Bolzen 58 kommt es natürlich zu einer Erhöhung des vorbeschriebenen Andrucks zwischen den Bauteilen 10, 11, 12. Um die Steifigkeit der Flansche 18 zu erhöhen sind diese stellenweise mit Versteifungsrippen 49 an ihren Flanschaußenflächen versehen.

In Abwandlung des Ausführungsbeispiels wäre es möglich auch im Grund der Tasche 40 wenigstens stellweise zusätzlich oder alternativ Teilstücke einer Heizmatte 20 vorzusehen. Diese ragen dann zusätzlich oder alternativ zu der vorausgehend im Zusammenhang von Fig. 4 und 5 erläuterten Schweißverbindungen ein.

## Patentansprüche

1. Schelle aus thermisch schweißfähigem Material (80) für ein ebenfalls aus schweißfähigem Material (80) bestehendes Leitungsrohr (10),
aus mindestens zwei das Leitungsrohr (10) im Gebrauchsfall umschließenden Segmenten (11, 12), von denen ggf. wenigstens eines (12) einen Rohrabgang (13) aufweist,
mit Heizmatten (20) aus elektrisch aufheizbaren Leitern (61), die an den Innenflächen (14) der Segmente (11, 12) integriert sind,
mit im Gebrauchsfall im Wesentlichen achsparallel zum Rohr verlaufenden Innenbegrenzungskanten der Segmente (11, 12)
und mit an den Innenbegrenzungskanten der Segmente sitzenden, längsverlaufenden Flanschen (18, 19),
die im Gebrauchsfall paarweise, als Flansch (19) und als Gegenflansch (18) zusammenwirken und an denen Befestigungselemente, wie Schrauben (58) und Muttern (59) zur Befestigung der Segmente (11, 12) am Leitungsrohr (10) angreifen,
wobei Schelle an der einen Innenbegrenzungskante (16) des Segments (12) eine einzige Lasche (30) angeordnet ist, welche die Innenfläche (52) des Flansches (18) überragt und in axialem Endabstand (36) vor den beiden Stirnflächen (46) des Segments (12) endet,
während an der gegenüberliegenden anderen Innenbegrenzungskante (17) dieses Segment (12) eine einzige, zur Aufnahme der Lasche (30) dienende Tasche (40) sich befindet, welche die Innenfläche (53) des Flansches (19) unterschreitet,
und die Heizmatte (20) sich zwar im Wesentlichen über die ganze Vorsprungslänge (34) und -breite der Lasche (30) erstreckt, aber die Tasche (40) ausspart,
wobei ferner die Lasche (30) eine so geringe Laschendicke (31) gegenüber der in sie integrierten Heizmatte aufweist,
dass im Gebrauchsfall beim Erhitzen das schweißfähige Material (80) sich nicht nur im Bereich der zwischen der Umfangsfläche (54) des Leitungsrohres (10) und der Lascheninnenfläche (32) entstehenden Innenberührungszone (35),
sondern auch im Bereich der zwischen der Laschenaußenfläche (33) und der Tascheninnenwand (41) des benachbarten Segments (12, 11) erzeugten Außenberührungszone (37) erweicht, ineinander fließt und, nach dem Erkalten, eine beidseitige Schweißverbindung (42, 43) der Lasche (30) erzeugt,
und wobei schließlich aus der Innenfläche (52, 53) wenigstens einer der beiden Flansche (18, 19) mindestens ein Schutzzapfen (50) sich erhebt, dessen Zapfenlänge (61) größer/gleich der Vorsprungslänge (34) der diesen Flansch überragenden Lasche (30) ausgebildet ist,
und diesem Schutzzapfen (50) eine Bohrung (58) im Gegenflansch (18, 19) des benachbarten Segments (12, 11) zugeordnet ist.

2. Schelle nach Anspruch 1, dadurch gekennzeichnet, dass die Lasche (30) blattförmig ausgebildet ist und über ihre ganze Laschenlänge (34) eine gleichförmige Laschendicke (31) aufweist.

3. Schelle nach Anspruch 1 oder 2, dadurch gekennzeichnet, daß der Flansch (19) und Gegenflansch (18) benachbarter Segmente (11, 12) zueinander komplementäre Schließelemente (62, 64) einer Schnappverbindung besitzen,
die beim Zusammenstecken der Segmente (11, 12) ineinander schnappen und dann für eine zumindest vorläufige Befestigung der Segmente (11, 12) aneinander und am Leitungsrohr (10) sorgen.

4. Schelle nach Anspruch 3, dadurch gekennzeichnet, daß die ineinander geschnappten Schließelemente (62, 64) die Segmente (11, 12) gegen das Leitungsrohr (10) angedrückt halten.

5. Schelle nach Anspruch 3 oder 4, dadurch gekennzeichnet, daß das eine Schließelement der Schnappverbindung aus einem sich über den einen Flansch (19) erhebenden Hakenglied (62) besteht, während das komplementäre Schließelement aus einer Öffnung (63) im Gegenflansch (18) besteht, in welche der Hakenkopf (65) des Hakenglieds (62) im Verbindungsfall einschnappt.

6. Schelle nach Anspruch 5, dadurch gekennzeichnet, daß im Inneren der Öffnung (63) des Gegenflansches (18) ein durch einen gestuften Öffnungsquerschnitt erzeugter Absatz (66) angeordnet ist und der Absatz (66) im Verbindungsfall vom Hakenkopf (65) hintergriffen wird.

7. Schelle nach einem oder mehreren der Ansprüche 1 bis 5, dadurch gekennzeichnet, daß der Flansch (19) und Gegenflansch (18) an den im Gebrauchsfall einander zugekehrten Innenflächen (52, 53) vom Flansch (19) und Gegenflansch (18) Anschlagelemente (55, 56) besitzt, die im Befestigungsfall der Segmente (11, 12) sich aneinander abstützen.

8. Schelle nach Anspruch 7, dadurch gekennzeichnet, daß die Anschlagelemente aus einer axialen Anschlagleiste (55, 56) bestehen, welche radial neben den die Innenflächen (52, 53) der beiden Flansche (18, 19) jeweils überragenden Laschen (30, 36) und unterschreitenden Taschen (40, 46) angeordnet sind.

9. Schelle nach einem oder mehreren der Ansprüche 1 bis 8, dadurch gekennzeichnet, daß die Laschen (30, 36), die Schutzzapfen (50), die Schließelemente (62, 64) der Schnappverbindung und/oder die Anschlagelemente (55, 56) einstückig mit dem jeweiligen Segment (11, 12) ausgebildet sind.
